# NEUE EUROPÄISCHE PATENTSCHRIFT

(11) **EP 0 875 873 B2**
(45) Veröffentlichungstag und Bekanntmachung des Hinweises auf die Entscheidung über den Einspruch: **12.12.2012**
(45) Hinweis auf die Patenterteilung: 24.09.2003
(21) Anmeldenummer: 98107138.4
(22) Anmeldetag: 20.04.1998
(51) Int. Cl.: G08B 13/183

(54) **Opto-elektronischer Sensor**
Opto-electronic sensor
Capteur opto-électronique

(30) Priorität: 30.04.1997 DE 19718390
(43) Veröffentlichungstag der Anmeldung: 04.11.1998
(73) Patentinhaber: SICK AG, 79183 Waldkirch (DE)
(72) Erfinder: Wüstefeld, Martin, 79350 Sexau (DE)
(74) Vertreter: Finsterwald, Martin

(56) Entgegenhaltungen:
- EP-A- 0 520 247
- EP-A- 0 559 357
- WO-A-89/11710
- DE-A- 3 532 197
- DE-A- 19 544 632
- DE-C2- 4 040 225
- DE-C2- 4 119 797
- DE-C3- 3 513 671
- DE-U1- 9 104 172
- US-A- 5 629 704
- MEINERT, HANS-THOMAS: 'Hintergrundausblendung bei Lichttastern' FEINWERKTECHNIK & MESSTECHNIK 97, OPTOELEKTRONIK, OPTISCHE ANZEIGEN Nr. 6, 1989, CARL HANSER VERLAG, MÜNCHEN, Seiten 261 - 264

## Beschreibung

Die Erfindung betrifft einen opto-elektronischen Sensor gemäß dem Oberbegriff des Anspruchs 1.

Derartige Sensoren werden beispielsweise als einfache Lichtschranken oder mehrstrahlige Lichtgittersysteme zur Zugangsüberwachung eingesetzt, wobei insbesondere gefährliche Maschinenarbeitsbereiche oder bestimmte Räume innerhalb eines Gebäudes abgesichert werden sollen.

Wenn bei Sensoren der genannten Art ein Objekt in den Überwachungsbereich gelangt und damit den Lichtweg zwischen Lichtsender und Lichtempfänger unterbricht, wird ein Gegenstandsfeststellungssignal generiert, welches beispielsweise zum Abschalten einer Maschine oder zur Auslösung eines akustischen oder optischen Warnvorgangs führen kann.

Bei bekannten Systemen beruht die Entscheidung, ob der Lichtweg zwischen Sender und Empfänger unterbrochen ist oder nicht, in der Regel auf einer rein energetischen Betrachtung, was bedeutet, daß immer dann, wenn die empfangene Lichtmenge einen bestimmten Wert unterschreitet, auf die Unterbrechung des Lichtwegs und somit auf das Vorhandensein eines Objekts im Überwachungsbereich geschlossen wird.

Problematisch bei bekannten Systemen ist die Tatsache, daß in bestimmten Anwendungsfällen reflektierende Objekte innerhalb des Sendewinkels des Lichtsenders bzw. innerhalb des Sichtbereichs des Lichtempfängers angeordnet sein können, die grundsätzlich zulässig sind, also kein Gegenstandsfeststellungssignal auslösen sollen, jedoch dazu führen können, daß ein unzulässiges Objekt im Überwachungsbereich umspiegelt wird. Bei einer derartigen Umspiegelung kann beispielsweise der zentrale Lichtstrahl zwischen Lichtsender und Lichtempfänger durch ein unzulässiges Objekt unterbrochen sein, jedoch durch die genannten zulässigen reflektierenden Objekte noch soviel Licht auf den Lichtempfänger geleitet werden, daß der kritische Lichtmengenwert nicht unterschritten wird und demzufolge auch die Erzeugung eines Gegenstandsfeststellungssignals unterbleibt. Bei den bekannten Sensoren kann somit nicht gewährleistet werden, daß alle im Überwachungsbereich vorhandenen unzulässigen Objekte zuverlässig detektiert werden.

Aus der WO-A-89/11710 ist ein Sensor bekannt, dessen Lichtempfänger als ortsauflisendes Empfangselement ausgebildet ist. Allerdings wird darin die Position des Lichtsignals nur über das Element des stärksten Lichteinfalls definiert.

Aus der DE 4119797C2, DE3513671C3, DE4040225C2 und H.-T. Meinert "Hintergrundausblendung bei Lichttastern" in Feinwerktechnik & Messtechnik 97 (1989) 6, S. 261-264 sind Triangulations-Lichttaster mit ortsautlösendern Lichtempfänger bekannt.

Eine Aufgabe der Erfindung besteht darin, einen opto-elektronischen Sensor der eingangs genannten Art derart weiterzubilden, daß dessen Zuverlässigkeit erhöht wird, wobei insbesondere der störende Einfluß von zulässigen reflektierenden Objekten in der Nähe des Überwachungsbereichs oder im Überwachungsbereich selbst eliminiert werden soll.

Erfindungsgemäß wird diese Aufgabe durch einen opto-elektronischen Sensor mit den Merkmalen des Anspruchs 1 gelöst.

Erfindungsgemäß kommt als Lichtempfänger also nicht mehr eine beispielsweise gemäß Stand der Technik verwendete einfache Photodiode zum Einsatz, sondern es wird stattdessen ein ortsauflösendes Empfangselement verwendet, welches eine lichtempfindliche Fläche aufweist, wobei das ortsauflösende Empfangselement so ausgelegt ist, daß die Position des Empfangslichtschwerpunkts auf der lichtempfindlichen Fläche bestimmt werden kann. Für die Lage des Empfangslichtschwerpunkts auf der lichtempfindlichen Fläche des Empfangselements ist eine Soll-Position vorgegeben, welche beim Betrieb des erfindungsgemäßen Sensors mit den ermittelten Ist-Positionen verglichen wird. Durch Einbringen eines unzulässigen Objektes in den Überwachungsbereich wird die Position des Empfangslichtschwerpunkts auf der lichtempfindlichen Fläche verschoben, wobei ein Gegenstandsfeststellungssignal dann erzeugt wird, wenn diese Verschiebung der beim Betrieb des Sensors ermittelten Ist-Position gegenüber der Soll-Position einen definierten Schwellwert überschreitet.

Gemäß dem erfindungsgemäßen Prinzip ist somit die Erkennung eines im Überwachungsbereich vorhandenen unzulässigen Objektes auch dann möglich, wenn in der Nähe des Überwachungsbereichs oder im Überwachungsbereich selbst zulässige reflektierende Objekte derart angeordnet sind, daß ein erheblicher Anteil der vom Lichtsender ausgesandten Lichtmenge auch bei Unterbrechung des zentralen Lichtstrahls durch ein unzulässiges Objekt zum Lichtempfänger geleitet wird, d.h. wenn die zulässigen Objekte zu einer Umspiegelung des unzulässigen Objekts führen. Die Zuverlässigkeit des erfindungsgemäßen Sensors ist somit gegenüber aus dem Stand der Technik bekannten Sensoren deutlich verbessert.

Ein Vorteil des erfindungsgemäßen Sensors besteht weiterhin darin, daß ein flexiblerer Einsatzbereich gegeben ist, da erfindungsgemäße Sensoren sehr nahe an zulässigen reflektierenden Objekten installiert werden können, ohne daß sich diese reflektierenden Objekte negativ auf die Zuverlässigkeit des Sensors auswirken.

Weiterhin ist von Vorteil, daß bei der Produktion eines erfindungsgemäßen Sensors keine sehr exakte Justierung der einzelnen optischen Komponenten zueinander nötig ist bzw. daß preisgünstige opto-mechanische Komponenten verwendet werden können, da für jeden produzierten Sensor nach Abschluß des Produktionsvorgangs jeweils ein Sollwert ermittelbar ist, der dann automatisch allen bei der Produktion aufgetretenen Ungenauigkeiten Rechnung trägt. Hierzu sei erläuternd bemerkt, daß bei der Produktion auftretende Ungenauigkeiten lediglich dazu führen, daß die Soll-Position des Empfangslichtschwerpunkts auf der lichtempfindlichen Fläche gegenüber einem ideal montierten Sensor verschoben wird, was jedoch keinerlei negative Auswirkungen hat, da einfach die verschobene Soll-Position als tatsächliche Soll-Position gespeichert werden kann, die dann - wie bereits erwähnt - automatisch allen Ungenauigkeiten Rechnung trägt.

Bevorzugt ist es, wenn das ortsauflösende Empfangselement aus einer Zeilenanordnung von mehreren lichtempfindlichen Elementen besteht. Ebenso ist es jedoch auch möglich, mehrere lichtempfindliche Elemente in Matrixanordnung vorzusehen, wobei diese Matrix dann die lichtempfindliche Fläche des gesamten Empfangselements bildet. Bei Verwendung einer Zeilenanordnung, d.h. eines eindimensionalen Empfangselements, können solche Umspiegelungen detektiert bzw. eliminiert werden, welche innerhalb einer Ebene erfolgen, die sich zumindest im wesentlichen parallel zu der Zeilenanordnung der das Empfangselement bildenden lichtempfindlichen Elemente erstreckt. Bei Verwendung einer Matrixanordnung können hingegen jegliche Umspiegelungen detektiert bzw. eliminiert werden, die in einer beliebigen Ebene erfolgen, welche parallel zur optischen Achse des Gesamt-Sensorsystems verläuft.

Beim Einsatz einer Matrixanordnung von einzelnen photoempfindlichen Elementen bietet sich der Einsatz von CCDs an.

Die einzelnen lichtempfindlichen Elemente einer Zeilen- oder Matrixanordnung können beispielsweise als Photodioden oder als andere, zur Detektion von Lichtsignalen geeignete Elemente ausgebildet sein.

Insbesondere ist es jedoch auch möglich, das erfindungsgemäß vorgesehene ortsauflösende Empfangselement als ein- oder zweidimensionales PSD, d.h. als positionssensitiven Detektor auszubilden. Ein positionssensitiver Detektor ist ein elektro-optisches Element mit einer lichtempfindlichen Fläche, wobei der Detektor beispielsweise zwei Ströme liefert, aus deren Amplitudenverhältnis auf die auf eine Dimension bezogene Position eines Lichtflecks auf der lichtempfindlichen Fläche des PSD geschlossen werden. Falls ein vier Ströme liefernder PSD eingesetzt wird, kann aus dem Amplitudenverhältnis dieser Ströme zueinander auf die auf zwei. Dimensionen bezogene Position eines Lichtflecks auf der lichtempfindlichen Fläche des PSD geschlossen werden.

Besonders vorteilhaft ist es, wenn eine Soll-Position des Empfangslichtschwerpunkts mittels eines Teach-in-Verfahrens ermittel- und abspeicherbar ist. In diesem Fall kann der erfindungsgemäße Sensor individuell an die am jeweiligen Einsatzort gegebenen Bedingungen angepaßt werden. Bei Durchführung des Teach-in-Verfahrens am Einsatzort ist die Position des empfangenen Lichtflecks bereits durch eventuell vorhandene, zulässige, reflektierende Objekte beeinflußt. Wenn folglich die abzuspeichernde Soll-Position im Rahmen des Teach-in-Verfahrens derart ermittelt wird, daß ein Lichtsignal in den von unzulässigen Objekten freien Überwachungsbereich ausgesandt und wieder empfangen wird, legt die Position des durch dieses Lichtsignal bewirkten Lichtflecks auf der lichtempfindlichen Fläche den auf die individuellen Gegebenheiten abgestimmten Sollwert fest. Der Endanwender des erfindungsgemäßen Sensors ist somit mittels des genannten Teach-in-Verfahrens dazu in der Lage, eine individuelle Anpassung an die jeweiligen Einsatzbedingungen vorzunehmen, ohne daß diese Einsatzbedingungen bereits beim Herstellungsprozeß des Sensors berücksichtigt werden müssen. Dies ermöglicht vielfältigste Verwendungsmöglichkeiten des erfindungsgemäß ausgebildeten Sensors.

Das ortsauflösende Empfangselement des Sensors kann im Bereich des Brennpunktes einer abbildenden Empfangsoptik angeordnet werden, wobei hier insbesondere aufgrund der durch das genannte Teach-in-Verfahren gegebenen Lernfähigkeit des Sensors nicht exakt auf die Einhaltung der exakten Position des Empfangselements im Brennpunkt geachtet werden muß. Es ist durchaus denkbar, daß das ortsauflösende Empfangselement bezüglich der abbildenden Empfangsoptik auch intra- oder extrafokal angeordnet wird.

Lichtsender und Lichtempfänger können auf einander gegenüberliegenden Seiten des Überwachungsbereichs angeordnet werden. Alternativ ist es möglich, Lichtsender und Lichtempfänger auf derselben Seite des Überwachungsbereichs und einen Retroreflektor auf der gegenüberliegenden Seite des Überwachungsbereichs vorzusehen. Letztgenannte Variante entspricht einer Autokollimationsanordnung.

Der erfindungsgemäße Sensor kann auch im Rahmen einer Lichtgitteranordnung verwendet werden, wobei hier jeweils eine Mehrzahl von nebeneinander angeordneten Lichtsendern und Lichtempfängern in der jeweils erforderlichen Struktur angeordnet werden.

Bevorzugt werden die Lichtempfänger der Lichtgitteranordnung als eindimensionale Empfangselemente ausgebildet. Diese eindimensionalen Empfangselemente können zueinander verdreht angeordnet sein, wobei die Verdrehachse derjenigen Achse entspricht, welche einander zugeordnete Lichtsender und Lichtempfänger miteinander-verbindet. Dabei ist es vorteilhaft, wenn der Verdrehwinkel zwischen benachbarten Empfangselementen 90° beträgt. Auf diese Weise ist eine erfindungsgemäße Lichtgitteranordnung dazu in der Lage, jegliche Umspiegelungen zu delektieren bzw. zu eliminieren, die in einer beliebigen Ebene erfolgen, welche parallel zu den genannten Verdrehachsen verläuft. Obwohl also nur eindimensionale Empfangselemente verwendet werden, können aufgrund der beschriebenen Verdrehung beliebige Umspiegelungen eliminiert werden.

Bei einem Verfahren zum Betrieb eines erfindungsgemäßen Sensors können eine oder mehrere abzuspeichernde Soll-Positionen - wie bereits erwähnt - ermittelt werden, indem der Sensor am Einsatzort unter Einsatzbedingungen bei objektfreiem Überwachungsbereich betrieben wird. Der Überwachungsbereich kann hierbei jedoch sehr wohl zulässige reflektierende Objekte aufweisen, es dürfen bei Ermittlung der Soll-Position lediglich keinerlei unzulässige Objekte vorhanden sein. Wenn an einem Einsatzort unterschiedliche Einsatzbedingungen möglich sind, kann für jede dieser Einsatzbedingungen ein Sollwert ermittelt und abgespeichert werden, wobei dann die unterschiedlichen Soll-Positionen beispielsweise mittels eines Wahlschalters aktivierbar sein können. Alternativ ist es auch möglich, alle abgespeicherten Soll-Positionen gleichzeitig zu aktivieren, so daß nur dann ein Gegenstandsfeststellungssignal abgegeben wird, wenn die Ist-Position von allen ermittelten Soll-Positionen in einem jeweils vorgegebenen Maß abweicht.

Die Ist- und Soll-Positionen können in Form von eine Dimension repräsentierenden Werten oder in Form von zwei Dimensionen repräsentierenden Koordinatenwerten ermittelt und verarbeitet werden.

Bei Verwendung eines zumindest zwei Teilströme liefernden Empfangselements (PSD), bei dem die Teilströme die Position des Empfangslichtschwerpunkts kennzeichnen, kann als die ermittelte Position kennzeichnende Größe der Quotient aus einem Teilstrom und dem Summenstrom der Teilströme verarbeitet werden. Auf diese Weise können zulässige Reflexionen sehr gut von unzulässigen Reflexionen unterschieden werden, was bei üblichen PSD-Berechnungsalgorithmen, bei denen in der Regel der Quotient zwischen der Differenz von zwei Teilströmen und deren Summenstrom gebildet wird, nicht der Fall ist.

Weiterhin ist es vorteilhaft, wenn bei einem Verfahren zum Betrieb eines erfindungsgemäßen Systems mit einer Mehrzahl von Lichtsendern und Lichtempfängern in Lichtgitteranordnung eine gleichmäßige Verschiebung der Empfangslichtschwerpunkte aller Lichtempfänger als zulässige Systemdejustage oder als zulässige niederfrequente Vibration klassifiziert wird, so daß in diesen Fällen keine Abgabe eines Gegenstandsfeststellungssignals erfolgt. Auf diese Weise wird eine höhere Systemverfügbarkeit, d.h. eine geringere Störanfälligkeit des Systems gewährleistet.

Bevorzugt ist es, wenn das Vorhandensein des ortsauflösenden Empfangselements zusätzlich genutzt wird, um unvermeidliche opto-mechanische Systemtoleranzen bei Lichtgittern zu kompensieren. Derartige Systemtoleranzen sind beispielsweise bedingt durch die Torsion der für Lichtgitter verwendeten Befestigungsprofile, durch Keilfehler in Linsen, durch dezentrierte Lagen von Blenden, etc. Um die genannte Kompensation zu bewirken, wird im Rahmen eines Kalibriervorgangs die Soll-Position für jedes ortsauflösende Empfangselement separat bestimmt und beispielsweise gemeinsam mit einer zugehörigen zulässigen Verschiebungstoleranz hinterlegt. So läßt sich erreichen, daß das erfindungsgemäße Lichtgitter-System die gemäß Sicherheitsnorm bestehenden Ansprüche bezüglich des Verschwenkwinkels erfüllt und gleichzeitig einen maximalen Justagebereich für den Endanwender zuläßt.

Schließlich ist es bei einem Verfahren zum Betrieb eines erfindungsgemäßen Sensors vorteilhaft, wenn ein Gegenstandsfeststellungssignal immer dann abgegeben wird, wenn entweder die Abweichung der ermittelten Ist-Position von der gespeicherten Soll-Position den definierten Schwellwert überschreitet oder wenn die vom Lichtempfänger empfangene Lichtmenge einen definierten Minimalwert unterschreitet. Bei Auftreten des Extremfalls, in dem der Lichtempfänger beispielsweise überhaupt kein oder nur sehr wenig Licht empfängt, und demzufolge keine Ist-Position des Lichtflecks ermittelt werden kann, ist es somit auch möglich, ein Gegenstandsfeststellungssignal zu generieren, da in diesem Fall die vom Lichtempfänger empfangene Lichtmenge einen definierten Minimalwert unterschreitet.

Weitere bevorzugte Ausführungsformen sind in den Unteransprüchen angegeben. Die Erfindung umfaßt beliebige Kombinationen der Unteransprüche, insbesondere auch der Verfahrensansprüche untereinander.

Die Erfindung wird nachfolgend anhand von Ausführungsbeispielen unter Bezugnahme auf die Zeichnungen beschrieben; in diesen zeigen:
- Fig. 1: ein Prinzipschaubild einer erfindungsgemäßen Sensoranordnung ohne reflektierende Objekte im überwachungsbereich bzw. in der Nähe des Überwachungsbereichs,
- Fig. 2: ein Prinzipschaubild einer erfindungsgemäßen Sensoranordnung mit einem zulässigen reflektierenden Objekt in der Nähe des Überwachungsbereichs,
- Fig. 3: ein Prinzipschaubild einer erfindungsgemäßen Sensoranordnung mit einem zulässigen reflektierenden Objekt in der Nähe des Überwachungsbereichs sowie einem unzulässigen Objekt im Überwachungsbereich, und
- Fig. 4: ein Prinzipschaubild eines erfindungsgemäßen Sensors in Autokollimationsanordnung mit einem zulässigen reflektierenden Objekt in der Nähe des Überwachungsbereichs sowie einem weiteren zulässigen reflektierenden Objekt im Überwachungsbereich.

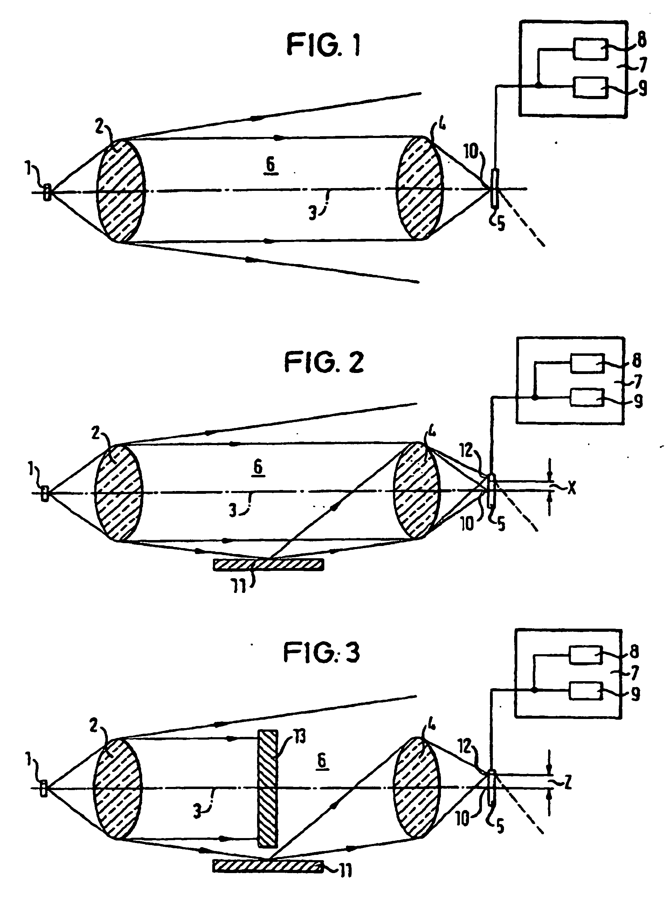

Fig. 1 zeigt einen als LED ausgebildeten Lichtsender 1, welcher einen Lichtkegel in Richtung einer Sendeoptik 2 aussendet. Die optische Achse 3 der Sendeoptik 2 fällt mit der optischen Achse einer Empfangsoptik 4 zusammen, auf deren der Sendeoptik 2 abgewandten Seite ein als PSD ausgebildeter Lichtempfänger 5 vorgesehen ist.

Zwischen der Sendeoptik 2 und der Empfangsoptik 4 befindet sich der Überwachungsbereich 6. .

Der ortsauflösende Lichtempfänger 5 liefert ein von der Position des auf ihn auftreffenden Lichtflecks abhängiges Signal an eine Auswerteschaltung 7, welche mit einem Speicherelement 8 zur Speicherung einer Soll-Position sowie mit einem Mittel 9 zum Vergleich der Soll-Position mit einer ermittelten Ist-Position ausgestattet ist.

Die Sendeoptik 2 bündelt das vom Lichtsender 1 ausgesandte Licht derart, daß ein Großteil dieses Lichts parallel zur optischen Achse 3 auf die Empfangsoptik 4 gelenkt wird. Ein Teil des vom Lichtsender 1 ausgesandten Lichts wird jedoch schräg zur optischen Achse 3 abgestrahlt und gelangt somit nicht auf die Empfangsoptik 4. Dieser Sachverhalt ist aus den in Fig. 1 eingezeichneten Pfeilen ersichtlich, welche die beschriebenen Lichtwege veranschaulichen.

Bei der in Fig. 1 gezeigten Betriebsstellung des Sensors. befinden sich weder zulässige noch unzulässige reflektierende Objekte im Überwachungsbereich 6 bzw. in der Nähe des Überwachungsbereichs 6, so daß das vom Lichtsender 1 ausgesandte Licht unbeeinflußt von solchen Objekten auf den Lichtempfänger 5 gelangt. Der auf dem Lichtempfänger 5 erzeugte Lichtfleck befindet sich gemäß Fig. 1 somit in seiner Nullposition, welche mit dem Bezugszeichen 10 veranschaulicht ist. Diese Nullposition 10 befindet sich bevorzugt in der Mitte der lichtempfindlichen Fläche des Lichtempfängers 5.

Der Betriebszustand gemäß Fig. 1 ist somit dazu geeignet, eine Soll-Position des auf den Lichtempfänger 5 abgebildeten Lichtflecks zu ermitteln, wobei diese Soll-Position der Nullposition 10 entspricht. Diese Soll-Position kann im Speicherelement 8 der Auswerteschaltung 7 abgelegt werden, so daß sie für einen späteren Vergleich mit Ist-Positionen zur Verfügung steht.

Fig. 2 zeigt die Anordnung gemäß Fig. 1, wobei hier zusätzlich unterhalb des Überwachungsbereichs 6 ein zulässiges reflektierendes Objekt 11 vorhanden ist; dessen reflektierende Fläche sich parallel zur optischen Achse 3 erstreckt und dem Überwachungsbereich 6 zugewandt ist.

Die in Fig. 2 gezeigten Pfeile veranschaulichen, daß ein Teil des vom Lichtsender 1 ausgesandten Lichts auf die reflektierende Fläche des zulässigen reflektierenden Objektes 11 auftrifft und von dort auf die Empfangsoptik 4 gelangt. Die Empfangsoptik 4 bündelt das vom zulässigen reflektierenden Objekt 11 reflektierte Licht derart, daß auf der lichtempfindlichen Fläche des Lichtempfängers 5 ein zweiter Lichtfleck an der mit 12 gekennzeichneten Position entsteht, die von der Nullposition 10 beabstandet ist.

Die Auswerteschaltung 7 ist dazu in der Lage, das Zentrum der Lichtintensität der beiden an der Nullposition 10 und an der Position 12 befindlichen Lichtflecke zu berechnen. In diese Berechnung gehen sowohl die Positionen der beiden Lichtflecke als auch die im Bereich der beiden Lichtflecke jeweils empfangenen Lichtmengen ein. Es ergibt sich somit ein Abstand X des derart gemittelten Zentrums der Lichtintensität von der Nullposition 10. Der Abstand X ist dabei kleiner als der Abstand der Position 12 von der Nullposition 10.

Der Abstand X kennzeichnet somit eine Soll-Position der Summe der empfangenen Lichtflecke unter den Betriebsbedingungen gemäß Fig. 2 mit einem zulässigen reflektierenden Objekt 11 in der Nähe des Überwachungsbereichs 6. Es ist möglich, diesen Sollwert zusätzlich zu dem gemäß Fig. 1 ermittelten Sollwert als weiteren Sollwert abzuspeichern. Ebenso ist es möglich, nur den gemäß Fig. 2 ermittelten Sollwert abzuspeichern. Bei Abspeicherung von zwei Sollwerten erfolgt die Erzeugung eines Gegenstandsfeststellungssignals immer dann, wenn der ermittelte Istwert von beiden Sollwerten abweicht.

Fig. 3 zeigt die Anordnung gemäß Fig. 2 mit dem Unterschied, daß nun im Überwachungsbereich 6 ein unzulässiges Objekt 13 vorhanden ist, welches optisch undurchlässig ist und verhindert, daß Licht von der Sendeoptik 2 parallel zur optischen Achse 3 zur Empfangsoptik 4 gelangt.

Es gelangt gemäß Fig. 3 jedoch weiterhin ein Teil des vom Lichtsender 1 ausgesandten Lichtes zur reflektierenden Fläche des zulässigen Objektes 11, von wo aus dieser Lichtanteil zur Empfangsoptik 4 gelenkt wird. Entsprechend Fig. 2 bündelt die Empfangsoptik 4 den auf diese Weise empfangenen Lichtanteil und bewirkt somit die Bildung eines Lichtflecks an der Position 12 auf dem Lichtempfänger 5. Wenn nun die Auswerteschaltung 7 unter den Bedingungen gemäß Fig. 3 wiederum das Zentrum der Lichtintensität der empfangenen Lichtflecke ermittelt, so wird diese Position von der gemäß Fig.2 ermittelten Position abweichen, da gemäß Fig. 3 an der Nullposition 10 aufgrund des vorhandenen unzulässigen Objekts 13 kein Lichtfleck empfangen wird. Das gemäß Fig. 3 ermittelte Zentrum der Lichtintensität wird somit hinsichtlich seiner Position mit der Position 12 zusammenfallen, die den Ort desjenigen Lichtflecks beschreibt, welcher durch die Umspiegelung am zulässigen reflektierenden Objekt 11 hervorgerufen wird. Das Zentrum der Lichtintensität weist somit gemäß Fig.3 einen Abstand Z von der Nullposition 10 auf, welcher vom Abstand X gemäß Fig. 2 verschieden ist.

Wenn nun in der Auswerteschaltung 7 im Vergleichsmittel 9 die gemäß den Fig. 1 und 2 gespeicherten Soll-Positionen mit der Ist-Position gemäß Fig. 3 verglichen werden, so kann festgestellt werden, daß die Abweichung Z keinem Sollwert entspricht, so daß auf das Vorhandensein eines Gegenstands bzw. eines unzulässigen Objekts im Überwachungsbereich 6 geschlossen werden kann.

Trotz der gemäß Fig. 3 stattfindenden und durch das zulässige Objekt 11 hervorgerufenen Umspiegelung kann somit das unzulässige Objekt 13 zuverlässig erkannt werden. Es kann nicht - wie beim Stand der Technik - geschehen, daß die Umspiegelung am Objekt 11 dazu führt, daß eine ausreichende Lichtmenge empfangen wird und alleine aufgrund dieser Tatsache die Abgabe eines Gegenstandsfeststellungssignals unterbleibt.

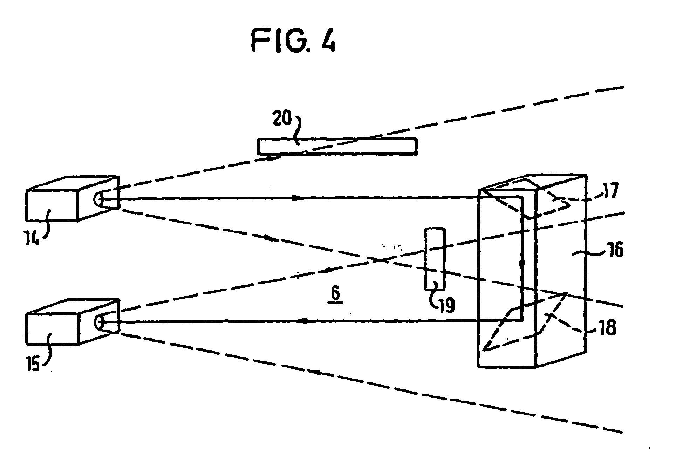

Fig. 4 zeigt einen erfindungsgemäßen opto-elektronischen Sensor in Autokollimationsanordnung. Lichtsender 14 und Lichtempfänger 15 sind auf einer Seite eines Überwachungsbereichs 6 angeordnet, während auf der gegenüberliegenden Seite des Überwachungsbereichs 6 ein Retroreflektor 16 vorgesehen ist, welcher zwei Spieqel 17, 18 aufweist, die eine Umlenkung des vom Lichtsender 14 ausgesandten Lichtstrahls zurück zum Lichtempfänger 15 bewirken. Anstelle des Retroreflektors 16 kann auch ein Tripelspiegelsystem vorgesehen werden.

Im Überwachungsbereich 6 ist ein zulässiges reflektierendes Objekt 19 angeordnet. Oberhalb des Überwachungsbereichs 6 ist ein weiteres zulässiges reflektierendes Objekt 20 angeordnet.

Beide reflektierenden Objekte 19, 20 bewirken eine Verschiebung des Zentrums der vom Lichtempfänger 15 ermittelten Lichtintensität bzw. eine Verschiebung des empfangenen Lichtschwerpunkts. Die Position des gemäß Fig. 4 ermittelten Lichtschwerpunkts wird als Sollwert abgespeichert. Wenn beim Betrieb der Anordnung gemäß Fig. 4 ein unzulässiges reflektierendes oder optisch undurchlässiges Objekt in den Überwachungsbereich 6 eingebracht wird, bewirkt dieses eine Verschiebung des Lichtschwerpunkts, was letztlich zur Erzeugung eines Gegenstandsfeststellungssignals führt.

## Patentansprüche

1. Opto-elektronischer Sensor mit einem Lichtsender (1, 14) zur Aussendung von Lichtsignalen in einen Überwachungsbereich (6) sowie einem Lichtempfänger (5, 15) zum Empfang der vom Lichtsender (1, 14) ausgesandten Lichtsignale, wobei eine direkt oder indirekt vom Lichtempfänger (5, 15) beaufschlagte Auswerteschaltung (7) vorgesehen ist, die im Falle des Vorhandenseins eines Objektes (13) im Überwacliungsbereich (6) und damit im Falle einer Unterbrechung des Lichtwegs zwischen Lichtsender (1, 14) und Lichtempfänger (5, 15) ein Gegenstandsfeststellungssigual erzeugt, wobei der Sensor als Lichtschranke oder als Lichtgitteranordnung mit einer Mehrzahl von Lichtsendern (1, 14) und Lichtempfängern (5, 15) ausgebildet ist, wobei entweder Lichtsender (1) und Lichtempfänger (5) auf einander gegenüberliegenden Seiten des Überwachungsbereichs (6) angeordnet sind oder Lichtsender (14) und Lichtempfänger (15) in einer Autokollimationsanordnung auf einer Seite des Überwachungsbereichs (6) und ein Retroreflektor (16) auf der gegenüberliegenden Seite des Überwachungsbereichs (6) angeordnet sind,
**dadurch gekennzeichnet,**
**daß** der Lichtempfänger (5, 15) als ortsauflösendes Empfangselement zur Bestimmung der Position des Empfangslichtschwerpunkts im Bereich der lichtempfindlichen Fläche des Empfangselements ausgebildet ist,
**daß** ein mit der Auswerteschaltung (7) zusammenwirkendes Speicherelement (8) zum Speichern zumindest einer Soll-Position des Empfangslichtschwerpunkts vorgesehen ist, und
**daß** die Auswerteschaltung (7) Mittel (9) zum Vergleich von während des Betriebs des Sensors ermittelten Ist-Positionen mit der gespeicherten Soll-Position aufweist, wobei ein Gegenstandsfeststellungssignal für den Fall erzeugbar ist, in dem die Abweichung der Ist-Position von der Soll-Position einen definierten Schwellwert überschreitet.

2. Opto-elektronischer Sensor nach Anspruch 1, **dadurch gekennzeichnet, daß** das ortsauflösende Empfangselement (5, 15) aus einer Zeilenanordnung von mehreren lichtempfindlichen Elementen besteht.

3. Opto-elektronischer Sensor nach Anspruch 1, **dadurch gekennzeichnet, daß** das ortsauflösende Empfangselement (5, 15) aus einer Matrixanordnung von mehreren lichtempfindlichen Elementen besteht.

4. Opto-elektronischer Sensor nach einem der vorhergehenden Ansprüche, **dadurch gekennzeichnet, daß** die lichtempfindlichen Elemente als Photodioden ausgebildet sind.

5. Opto-elektronischer Sensor nach einem der Ansprüche 1 bis 3, **dadurch gekennzeichnet, daß** das ortsauflösende Empfangselement (5, 15) als ein- oder zweidimensionales PSD (positionssensitiver Detektor) ausgebildet ist.

6. Opto-elektronischer Sensor nach einem der vorhergehenden Ansprüche, **dadurch gekennzeichnet, daß** eine Soll-Position des Empfangsliehtschwerpunkts mittels eines Teach-in-Verfahrens ermittel- und abspeicherbar ist.

7. Opto-elektronischer Sensor nach einem der vorhergehenden Ansprüche, **dadurch gekennzeichnet, daß** das ortsauflösende Empfangselement (5) im Bereich des Brennpunktes einer abbildenden Empfangsoptik (4) angeordnet ist.

8. Opto-elektronischer Sensor nach einem der Ansprüche 1 bis 6, **dadurch gekennzeichnet, daß** das ortsauflösende Empfangselement bezüglich einer abbildenden Empfangsoptik intra- oder extrafokal angeordnet ist.

9. Opto-elektronischer Sensor nach einem der vorhergehenden Ansprüche, **dadurch gekennzeichnet, daß** die Lichtempfänger (5, 15) der Lichtgitteranordnung als eindimensionale Empfangselemente ausgebildet sind, die jeweils um die Lichtsender und Lichtempfänger miteinander verbindende Achse verdreht zueinander angeordnet sind.

10. Opto-elektronischer Sensor nach Anspruch 9, **dadurch gekennzeichnet, daß** der Verdrehwinkel zwischen benachbarten Empfangselementen 90° beträgt.

11. Verfahren zum Betrieb eines opto-elektronischen Sensors nach einem der vorhergehenden Ansprüche, **dadurch gekennzeichnet, daß** eine abzuspeichernde Soll-Position ermittelt wird, indem der Sensor am Einsatzort unter Einsatzbedingungen bei objektfreiem Überwachungsbereich (6) betrieben wird.

12. Verfahren zum Betrieb eines opto-elektronischen Sensors nach einem der vorhergehenden Ansprüche, **dadurch gekennzeichnet, daß** Ist- und Soll-Positionen in Form von eine Dimension repräsentierenden werten oder in Form von zwei Dimensionen repräsentierenden Koordinatenwerten ermittelt und verarbeitet werden.

13. Verfahren zum Betrieb eines opto-elektronischen Sensors nach einem der vorhergehenden Ansprüche, **dadurch gekennzeichnet, daß** bei Verwendung eines zumindest zwei, die Position des Empfangslichtschwerpunkts kennzeichnende Teilströme liefernden Empfangselements (PSD) der Quotient aus einem Teilstrom und dem Summenstrom der Teilströme als die ermittelte Position kennzeichnende Größe verarbeitet wird.

14. Verfahren zum Betrieb eines opto-elektronischen Sensors nach einem der vorhergehenden Ansprüche, **dadurch gekennzeichnet, daß** bei Verwendung einer Mehrzahl von Lichtsendern (1, 14) und Lichtempfängern (85, 15) in Lichtgitteranordnung eine gleichmäßige Verschiebung der Empfangslichtschwerpunkte aller Lichtempfänger (5, 15) als zulässige Systemdejustage oder als zulässige niederfrequente Vibration klassifiziert wird und somit kein Gegenstandsfeststellungssignal auslöst.

15. Verfahren zum Betrieb eines opto-elektronischen Sensors nach einem der vorhergehenden Ansprüche, **dadurch gekennzeichnet, daß** ein Gegenstandsfeststellungssignal dann abgegeben wird, wenn die Abweichung der ermittelten IstPosition von der gespeicherten Soll-Position den definierten Schwellwert überschreitet oder die vom Lichtempfänger (5, 15) empfangene Lichtmenge einen definierten Minimalwert unterschreitet.

## Claims

1. An optoelectronic sensor comprising a light transmitter (1, 14) for the transmission of light signals into a monitored zone (6), and also a light receiver (5, 15) for the reception of light signals transmitted by the light transmitter (1, 14), wherein an evaluation circuit (7) is provided which is directly or indirectly acted on by the light receiver (5, 15) and which, in the case of the presence of an object (13) in the monitored zone (6) and thus in the case of an interruption of the light path between the light transmitter (1, 14) and the light receiver (5, 15), produces an article detection signal, wherein the sensor is formed as a light barrier or as a light grid arrangement with a plurality of light transmitters (1, 14) and light receivers (5. 15), wherein either the light transmitter (1) and the light receiver (5) are arranged on mutually opposite sides of the monitored zone (6) or the light transmitter (14) and the light receiver (15) are arranged in an autocollimation arrangement on one side of the monitored zone (6) and a retroreflector (16) is arranged on the opposite side of the monitored zone (6),
**characterised in that** the light receiver (5, 15) is formed as a spatially resolving receiver element for the determination of the position of the centre of intensity of the received light in the region of the light sensitive area of the receiver element;
**in that** a memory element (8), which co-operates with the evaluation circuit (7), is provided for the storage of at least one desired position of the centre of intensity of the received light; and
**in that** the evaluation circuit (7) has means (9) for the comparison of the actual positions found during the operation of the sensor with the stored desired position, wherein an article detection signal can be produced for the case in which the deviation of the actual position from the desired position exceeds a defined threshold value.

2. An optoelectronic sensor in accordance with claim 1, **characterised in that** the spatially resolving receiver element (5, 15) comprises a row arrangement of a plurality of light sensitive elements.

3. An optoelectronic sensor in accordance with claim 1, **characterised in that** the spatially resolving receiver element (5, 15) comprises a matrix arrangement of a plurality of light sensitive elements.

4. An optoelectronic sensor in accordance with any one of the preceding claims, **characterised in that** the light sensitive elements are formed as photodiodes.

5. An optoelectronic sensor in accordance with any one of the preceding claims 1 to 3, **characterised in that** the spatially resolving receiver element (5, 15) is formed as a one dimensional or two dimensional PSD (position sensitive detector).

6. An optoelectronic sensor in accordance with any one of the preceding claims, **characterised in that** a desired position of the centre of intensity of the received light can be found and stored by means of a teach-in method.

7. An optoelectronic sensor in accordance with any one of the preceding claims, **characterised in that** the spatially resolving receiver element (5) is arranged in the region of the focal point of an image forming optical receiving system (4).

8. An optoelectronic sensor in accordance with any one of the claims 1 to 6, **characterised in that** the spatially resolving receiver element is arranged intrafocally or extrafocally with respect to an image forming optical receiving system.

9. An optoelectronic sensor in accordance with any one of the preceding claims, **characterised in that** the light receivers (15) of the light grid arrangement are formed as one-dimensional receiver elements which are respectively arranged rotated about the axis which connects the light transmitter and the light receiver to one another.

10. An optoelectronic sensor in accordance with claim 9, **characterised in that** the angle of rotation between the adjacent receiver elements amounts to 90°.

11. A method for the operation of an optoelectronic sensor in accordance with any one of the preceding claims, **characterised in that** a desired position which is to be stored is found **in that** the sensor is operated at the place of use under conditions of use with an object-free monitored zone (6).

12. A method for the operation of an optoelectronic sensor in accordance with any one of the preceding claims, **characterised in that** actual and desired positions in the form of values representing one dimension or in the form of co-ordinate values representing two dimensions are found and processed.

13. A method of operating an optoelectronic sensor in accordance with any one of the preceding claims, **characterised in that**, on using a receiver element (PSD) delivering at least two partial currents which characterise the position of the centre of intensity of the received light, the quotient of one partial current and the current sum of the partial currents is processed as the parameter characterising the position which is found.

14. A method for the operation of an optoelectronic sensor in accordance with any one of the preceding claims, **characterised in that**, on using a plurality of light transmitters (1, 14) and light receivers (5, 15) in the light grid arrangement, a uniform shift of the centres of gravity of the received light of all light receivers (5, 15) is classified as permissible system misalignment or as permissible low frequency vibration and thus no article detection signal is triggered.

15. A method of operating an optoelectronic sensor in accordance with any one of the preceding claims, **characterised in that** an article detection signal is transmitted when the deviation of the actual position that is found from the stored desired position exceeds the defined threshold or the quantity of light received by the light receiver (5, 15) falls short of a defined minimum value.

## Revendications

1. Capteur opto-électronique comportant un émetteur de lumière (1, 14) destiné à l'émission de signaux lumineux dans une zone de surveillance (6) ainsi qu'un récepteur de lumière (5, 15) destiné à la réception des signaux lumineux émis par l'émetteur de lumière (1, 14), un circuit d'analyse (7) alimenté directement ou indirectement par le récepteur de lumière (5, 15) étant prévu, qui en cas de présence d'un objet (13) dans la zone de surveillance (6) et par conséquence dans le cas d'une interruption du trajet lumineux entre les émetteurs de lumière (1, 14) et les récepteurs de lumière (5, 15), produit un signal de constatation d'objet, le capteur étant conçu comme une barrière lumineuse ou comme un agencement de grille lumineuse avec une pluralité d'émetteurs de lumière (1, 14) et de récepteurs de lumière (5, 15), dans lequel soit l'émetteur de lumière (1) et le récepteur de lumière (5) sont agencés sur les côtés mutuellement opposés de la zone de surveillance (6), soit l'émetteur de lumière (14) et le récepteur de lumière (15) sont agencés selon un ordonnancement d'autocollimation sur un côté de la zone de surveillance (6) et un rétroréflecteur (16) est agencé sur le côté opposé de la zone de surveillance (6), **caractérisé**
**en ce que** le récepteur de lumière (5, 15) est conçu en tant qu'élément récepteur à résolution spatiale pour déterminer la position du barycentre de lumière de réception dans la zone de la surface sensible à la lumière de l'élément récepteur,
**en ce qu'**il est prévu un élément de mémoire (8) coopérant avec le circuit d'analyse (7) pour mémoriser au moins une position de consigne du barycentre de lumière de réception et
**en ce que** le circuit d'analyse (7) présente des moyens (9) pour la comparaison des positions réelles déterminées pendant le fonctionnement du capteur avec la position de consigne mémorisée, un signal de constatation d'objet pouvant être généré dans le cas où l'écart entre la position réelle et la position de consigne dépasse une valeur seuil définie.

2. Capteur opto-électronique selon la revendication 1, **caractérisé en ce que** l'élément récepteur (5, 15) à résolution spatiale comporte un agencement horizontal de plusieurs éléments sensibles à la lumière.

3. Capteur opto-électronique selon la revendication 1, **caractérisé en ce que** l'élément récepteur (5, 15) à résolution spatiale comporte un agencement matriciel de plusieurs éléments sensibles à la lumière.

4. Capteur opto-électronique selon l'une quelconque des revendications précédentes, **caractérisé en ce que** les éléments sensibles à la lumière sont réalisés sous forme de photodiodes.

5. Capteur opto-électronique selon l'une quelconque des revendications 1 à 3, **caractérisé en ce que** l'élément récepteur (5, 15) à résolution spatiale est réalisé sous forme de détecteur PSD unidimensionnel ou bidimensionnel (détecteur de position).

6. Capteur opto-électronique selon l'une quelconque des revendications précédentes, **caractérisé en ce qu'**une position de consigne du barycentre de lumière de réception peut être déterminée et mémorisée à l'aide de la méthode dite de l'apprentissage direct.

7. Capteur opto-électronique selon l'une quelconque des revendications précédentes, **caractérisé en ce que** l'élément récepteur (5) à résolution spatiale est disposé dans la zone du foyer d'un collecteur de lumière (4) de reproduction.

8. Capteur opto-électronique selon l'une quelconque des revendications 1 à 6, **caractérisé en ce que** l'élément récepteur à résolution spatiale est disposé dans un plan intrafocal ou extrafocal par rapport à un collecteur de lumière de reproduction.

9. Capteur opto-électronique selon l'une quelconque des revendications précédentes, **caractérisé en ce que** les récepteurs de lumière (5, 15) de l'agencement de grille lumineuse sont réalisés sous forme d'éléments récepteurs unidimensionnels qui sont respectivement disposés l'un vers l'autre de façon à pivoter autour de l'axe assemblant l'un avec l'autre des émetteurs de lumière et des récepteurs de lumière.

10. Capteur opto-électronique selon la revendication 9, **caractérisé en ce que** l'angle de pivotement entre des éléments récepteurs adjacents est de 90 °.

11. Procédé d'exploitation d'un capteur opto-électronique selon l'une quelconque des revendications précédentes, **caractérisé en ce qu'**une position de consigne devant être mémorisée est déterminée tandis que le capteur est utilisé sur le lieu d'intervention dans des conditions d'utilisation de zone de surveillance (6) sans objet.

12. Procédé d'exploitation d'un capteur opto-électronique selon l'une quelconque des revendications précédentes, **caractérisé en ce que** les positions réelle et de consigne sont déterminées et traitées sous forme de valeurs représentant une dimension ou sous forme de valeurs de coordonnées représentant deux dimensions.

13. Procédé d'exploitation d'un capteur opto-électronique selon l'une quelconque des revendications précédentes, **caractérisé en ce que**, lors de l'utilisation d'un élément récepteur (PSD) délivrant au moins deux courants partiels identifiant la position du barycentre de lumière de réception, le quotient d'un courant partiel et du courant total des courants partiels est traité comme une grandeur identifiant la position déterminée.

14. Procédé d'exploitation d'un capteur opto-électronique selon l'une quelconque des revendications précédentes, **caractérisé en ce que**, en cas d'utilisation d'une pluralité d'émetteurs de lumière (1, 14) et de récepteurs de lumière (85, 15) dans un agencement de grille lumineuse, un déplacement régulier des barycentres de lumière de réception de tous les récepteurs de lumière (5, 15) est classé comme écart admissible du système ou comme vibration à basse fréquence admissible et, par conséquent, ne déclenche pas de signal de constatation d'objet.

15. Procédé d'exploitation d'un capteur opto-électronique selon l'une quelconque des revendications précédentes, **caractérisé en ce qu'**un signal de constatation d'objet est émis quand l'écart entre la position réelle déterminée et la position de consigne mémorisée dépassent le seuil de valeur défini ou quand la quantité de lumière reçue par le récepteur de lumière (5, 15) diminue au-dessous d'une valeur minimale définie.
